# EUROPÄISCHE PATENTSCHRIFT

(11) **EP 3 096 860 B1**
(45) Veröffentlichungstag und Bekanntmachung des Hinweises auf die Patenterteilung: **02.09.2020**
(21) Anmeldenummer: 15703232.7
(22) Anmeldetag: 20.01.2015
(51) Int. Cl.: B01D 35/30, B01D 27/08

(54) **FILTERSYSTEM MIT KUPPLUNGSVORRICHTUNG**
FILTER SYSTEM COMPRISING COUPLING DEVICE
SYSTÈME DE FILTRATION À DISPOSITIF D'ACCOUPLEMENT

(30) Priorität: 23.01.2014 DE 102014000717; 20.02.2014 DE 102014002239
(43) Veröffentlichungstag der Anmeldung: 30.11.2016
(73) Patentinhaber: MANN+HUMMEL GmbH, 71636 Ludwigsburg (DE)
(72) Erfinder: HASENFRATZ, Robert, 74523 Schwäbisch Hall (DE); PFLÜGER, Frank, 74343 Sachsenheim (DE); RÖSGEN, André, 73630 Remshalden (DE); THALMANN, Christian, 67346 Speyer (DE); WAGNER, Fabian, 71696 Möglingen (DE); SKORPÍKOVÁ, Petra, 67176 Nasimerice (CZ)
(74) Vertreter: Seyboth, Matthias
(86) Internationale Anmeldenummer: PCT/EP2015/050994
(87) Internationale Veröffentlichungsnummer: WO 2015/110421

(56) Entgegenhaltungen:
- EP-A2- 0 221 675
- WO-A1-2015/004100
- DE-A1-102010 035 465

## Beschreibung

### Technisches Gebiet

Die Erfindung betrifft ein Filtersystem zum Filtern eines Fluids mit einer Kupplungsvorrichtung, insbesondere zur Verwendung als Kraftstofffilter einer Brennkraftmaschine.

### Stand der Technik

Es ist bekannt, dass eine der Herausforderungen bei der Konstruktion von Wechselfiltersystemen darin liegt, eine zuverlässige Anbringung und Abdichtung an einer Aufnahme zu schaffen, an der das Filtersystem angebaut wird. Die mechanischen Schnittstellen müssen möglichst einfach und dennoch robust und zuverlässig ausgelegt sein. Das Filtersystem muss möglichst einfach, schnell und ohne Probleme wiederholt ausgetauscht werden können. Außerdem gilt es, eine Vielzahl von Anbausituationen mit ähnlichen Lösungen abzudecken, um kostengünstige Filtersysteme darstellen zu können.

Kraftstofffilter verwenden gewöhnlich ein Einwegfilterelement, das nach vorbestimmten Zeitintervallen der Filterverwendung ausgewechselt wird. Das Einwegelement ist konventionell an dem Filteraufbaugrundteil durch einen Halte- oder Verriegelungsmechanismus befestigt, der lösbar ist, um das Entfernen des Elements für Auswechselzwecke zuzulassen. Es gibt zahlreiche konventionelle Grundteilhaltesysteme für Kraftstofffilterelemente. Viele solcher Haltesysteme sind äußerst unbequem in der Verwendung oder versagen sogar nach einer Zeit aufgrund der rauhen Umgebung des Kraftstofffiltereinsatzes.

Die US 5302284 A beschreibt einen Filteraufbau, der ein Grundteil, ein an dem Grundteil anbringbares Filterelement und einen Haltekragen zum Befestigen des Filterelements am Grundteil einschließt. Der Kragen hält eine wellenförmige Feder, die zwischen beabstandeten Schultern des Kragens gehalten wird. Das Grundteil bildet eine Aufnahmeeinrichtung zum Aufnehmen des Kopfes des Filterelements. Eine Rampe und eine Arretierung, die benachbart dem Ende der Rampe ist, sind vor dem Grundteil angeordnet. Der Haltekragen schließt weiter eine Nocke ein, die eine Sperrklinke aufweist. Die Nocke ist mit der Rampe in Eingriff bringbar, so dass, wenn der Kragen winkelmäßig gedreht wird, sich die Nocke auf der Rampe bewegt und die Sperrklinke in die Arretierung unter der Vorspannung der Feder eingreift, um das Filterelement am Grundteil zu verriegeln.

In DE 10 2010 035465 A1 wird eine Filtervorrichtung offenbart, die einen Wechselfilter aufweist, der stirnseitig einen koaxialen Anschlusszylinder hat, auf dessen Mantelfläche eine umlaufende Dichtungsnut für eine Radialdichtung und eine Kupplungsvorrichtung vorliegt. Sowohl die Dichtungsnut als auch die Kupplungsvorrichtung werden durch ein gemeinsames Bauteil gebildet.

Ferner ist ein umlaufendes Federelement offenbart, das sich einerseits an dem Anschlusszylinder und andererseits an dem Filterkopf abstützt und eine Rastverbindung vorspannt. Das Federelement ist filterkopfseitig befestigt.

EP 0 221 675 A2 offenbart eine separate Ausbildung von Kupplungselement und Dichtung, jedoch keinen separaten Dichtungshalter. Die Dichtung ist dort direkt in einem umgebördelten Rand des Gehäusetopfs eingelegt, während das Kupplungselement mit dem Gehäusetopf auf der inneren Mantelfläche durch (Punkt)Schweißungen verbunden ist.

### Offenbarung der Erfindung

Eine Aufgabe der Erfindung ist es daher, ein Filtersystem zum Filtern eines Fluids zu schaffen, das eine robuste und kostengünstige Möglichkeit vorsieht, um eine zuverlässige lösbare Halterung des Filtersystems an einem filtersystemexternen Aufnahmeteil zu gewährleisten. Weiterhin soll eine zuverlässige Abdichtung des Filtersystems zu dem Aufnahmeteil sowie zwischen Einlass und Auslass bereitgestellt werden.

Die vorgenannte Aufgabe wird nach einem Aspekt der Erfindung gelöst von einem Filtersystem, bei dem eine Kupplungsvorrichtung ein oder mehrere Kupplungselemente vorsieht, welche durch eine Schiebe-Dreh-Bewegung zumindest teilweise in einer axialen Richtung in eine in einer Aufnahme angeordnete Kupplungskontur einführbar sind, um so das Filtersystem in der Aufnahme in einer Endposition zu halten und zu verriegeln.

Günstige Ausgestaltungen und Vorteile der Erfindung ergeben sich aus den weiteren Ansprüchen, der Beschreibung und der Zeichnung.

Es wird ein Filtersystem zum Filtern eines Fluids mit stirnseitigem Einlass und Auslass vorgeschlagen, das wenigstens ein Filterelement, ein Filtergehäuse, eine Kupplungsvorrichtung zur Kopplung des Filtersystems an eine filtersystemexterne Aufnahme, sowie einen Dichtungshalter mit einer Dichtung zur Abdichtung des Filtersystems an der Aufnahme umfasst. Dabei sieht die Kupplungsvorrichtung ein oder mehrere Kupplungselemente vor, welche durch eine Schiebe-Dreh-Bewegung zumindest teilweise in einer axialen Richtung in eine in der Aufnahme angeordnete Kupplungskontur einführbar sind, um so das Filtersystem in der Aufnahme in einer Endposition zu halten und zu verriegeln. Mit anderen Worten ist die Kupplungsvorrichtung als Schnellkupplung ausgeführt.

Das erfindungsgemäße Filtersystem kann mit der Kupplungsvorrichtung, die mit einer entsprechenden Dichtungsanordnung verbunden ist, direkt an einer filtersystemexternen Aufnahme, die bspw. an einem Druckgusskopf einer Brennkraftmaschine sitzt, angebracht werden. Dabei wird das Filtersystem, das hängend, stehend oder liegend angeordnet sein kann, mit der Kupplungsvorrichtung an der Aufnahme gehalten. Wenn das Filtersystem angebracht wird, ist es günstig, wenn die Dichtung direkt mit dem Filtersystem verbunden ist und so bei der Montage nicht herausfallen und/oder beschädigt werden kann. Der Dichtungshalter ist mit der Kupplungsvorrichtung verbunden.

Die Kupplungsvorrichtung kann in Form einer Bajonettverbindung ausgebildet sein, so dass die Kupplungselemente, welche an der Kupplungsvorrichtung angeordnet sind, beim Eindrehen des Filtersystems in die Aufnahme in eine an der Aufnahme befindliche Kupplungskontur gleiten können und bei weiterem Drehen des Filtersystems dabei in eine Endposition gleiten können, wodurch das Filtersystem in der Aufnahme verriegelt wird.

Diese Montageprozedur wird durch ein an der Kupplungsvorrichtung angebrachtes Spannelement, bspw. in Form einer Druckfeder, unterstützt, welches in axialer Richtung wirkt und bei Überwinden der Federkraft des Spannelements das Filtersystem in die Endposition gleiten lässt und sodann in dieser Endposition durch die Federvorspannung verriegelt. Zum Ausdrehen des Filtersystems muss dann zunächst wieder die Federvorspannung überwunden werden, um anschließend die Kupplungselemente über die Kupplungskontur herausgleiten zu lassen und so das Filtersystem von der Aufnahme abnehmen zu können.

Die Kupplungsvorrichtung kann zweckmäßigerweise aus einem Kunststoff ausgebildet sein, wobei für geringere mechanische Anforderungen thermoplastische Werkstoffe eingesetzt werden können, welche eine maximale Flächenpressung bis zu 20 N/mm² zulassen, während für höhere mechanische Anforderungen Duromere eingesetzt werden können, welche eine maximale Flächenpressung bis zu 80 N/mm² erlauben. Da insbesondere die Kupplungselemente höher belastet sind beim Gleiten in der Kupplungskontur, stellen Duromere eine bevorzugte Ausführungsform dar. Mit diesen Werkstoffen lassen sich die Kupplungselemente auch in beliebiger Form gestalten, was für die konstruktive Ausführung der Kupplungsvorrichtung und der Kupplungskontur von Vorteil ist. Die Aufnahme kann bspw. aus Aluminium-Druckguss gefertigt sein, das eine höhere Festigkeit als Kunststoffe, insbesondere ein geringfügig höhere Festigkeit als Duromere, aufweist, so dass auch bei mehrfachem Anbringen und Austauschen eines Filtersystems keine Verschleißerscheinungen an der Aufnahme, die Bestandteil der Brennkraftmaschine sein kann, auftreten können.

Von weiterem Vorteil des erfindungsgemäßen Filtersystems ist, dass das Spannelement, bspw. in Form einer wellenförmigen Druckfeder nicht an der Aufnahme, die ja Bestandteil der Brennkraftmaschine ist, angebracht ist, sondern an der Kupplungsvorrichtung angeordnet ist. Dadurch gestaltet sich die konstruktive Form der Aufnahme einfacher und auch die Befestigung des Spannelements ist in der Kupplungsvorrichtung flexibler gestaltbar. Da die Kupplungsvorrichtung in Kunststoff ausgeführt ist, können günstig bspw. zusätzliche Nasen als Halteelemente angebracht werden, welche das Spannelement halten und worüber es leicht eingelegt oder auch sogar ausgetauscht werden könnte.

Vorteilhaft kann so die Kupplungsvorrichtung ein Spannelement umfassen, das im montierten Zustand das Filtersystem axial gegen die Aufnahme verspannt. Durch das Wirken des Spannelements kommt die Funktion einer Schnellkupplung, bspw. in Form eines Bajonetts zum Tragen, indem das Filtersystem durch Überwinden einer Vorspannkraft des Spannelements in die Endposition der Kupplungskontur einrasten kann.

Günstigerweise kann das Spannelement wenigstens zwei, insbesondere bspw. fünf, Erhebungen in axialer Richtung vorsehen. Durch die Erhebungen wird zum einen die Vorspannkraft des Spannelements aufgebracht, zum anderen haben die Erhebungen den Vorteil, dass bei Versagen einer Erhebung bspw. durch Materialbruch, weitere Erhebungen vorhanden sind, um die Funktion in Form der Vorspannkraft des Spannelements dennoch aufrechtzuerhalten.

In einer vorteilhaften Ausgestaltung kann die Kupplungsvorrichtung mit dem Dichtungshalter verbunden sein. Dadurch ergibt sich eine stabile und dauerhafte Abdichtung beim Montieren des Filtersystems an der Aufnahme. Des Weiteren ist durch die feste Verbindung des Dichtungshalters mit dem Filtergehäuse auch die Kupplungsvorrichtung fest und stabil mit dem Gehäuse verbunden.

Die Kupplungsvorrichtung sieht ein oder mehrere Halteelemente zur Halterung des Spannelementes vor. Auf diese Weise ist das Spannelement in der Kupplungsvorrichtung günstig positionierbar und kann leicht montiert oder im Bedarfsfall sogar ausgetauscht werden, sollten sich Materialermüdung oder Versagen des Spannelements einstellen.

Vorteilhaft kann die Dichtung radial angeordnet sein, so dass diese das Filtersystem im montierten Zustand radial zur Aufnahme abdichtet. Da die Aufnahme sinnvollerweise als ein Stutzen ausgeführt sein kann, über den das Filtersystem geschoben werden kann und worüber auch Einlass und Auslass des Filtersystems abgedeckt werden, ist eine radiale Dichtung des Filtersystems sinnvoll und günstig, um die Funktion dauerhaft sicherzustellen.

Der Dichtungshalter ist als der stirnseitige Abschluss des Filtersystems ausgebildet. Damit ist auch eine dauerhafte und stabile Abdichtung am stirnseitigen Ende des Filtergehäuses darstellbar. Der einteilige Dichtungshalter, der bspw. als ein Blechteil ausgeführt ist, kann mit dem Filtergehäuse durch Schweißen, Kleben, Bördeln oder ähnlichen Fügeverfahren verbunden werden, um so eine dauerhaft dichte und mechanisch feste Verbindung darzustellen. Die Kontur für die Halterung der Dichtung kann dabei bspw. durch Schlagen, Innenhochdruckumformen ("Hydroforming"), Rollen oder ähnliche Umformverfahren hergestellt werden, um einen einteiligen Dichtungshalter, der eine U-förmige Aufnahme für die Dichtung umfasst, darzustellen.

Günstigerweise kann der Dichtungshalter ein oder mehrere Verbindungselemente zur Verbindung mit der Kupplungsvorrichtung vorsehen. Über diese Verbindungselemente, die bspw. in Form von Haken oder Klemmen ausgebildet sein können, lassen sich der Dichtungshalter und die Kupplungsvorrichtung fest verbinden. Auch ist so eine unter Umständen sogar lösbare Verbindung darstellbar, wenn die Verbindungselemente bspw. als Rastelemente ausgebildet sind.

Zweckmäßigerweise kann das Filterelement über einen Filterelementhalter, der sich an der Kupplungsvorrichtung abstützt, in dem Filtergehäuse angeordnet sein. Auf diese Weise kann das Filterelement fest und stabil in dem Filtergehäuse abgestützt und evtl. verspannt werden. Weiter ist auch ein Austausch des Filterelements durch Entfernen des Filterelementhalters denkbar.

Nach einem weiteren Aspekt betrifft die Erfindung eine Kombination aus einem Filtersystem und einer Aufnahme, wobei die Aufnahme eine Kupplungskontur aufweist, mit welcher ein oder mehrere Kupplungselemente einer Kupplungsvorrichtung des Filtersystems durch eine Schiebe-Dreh-Bewegung zumindest teilweise in einer axialen Richtung kuppelbar sind. Da die Schnittstellen des Filtersystems mit dem Dichtungshalter und der Kupplungsvorrichtung auf die filtersystemexterne Aufnahme sich in ihrer Funktionsweise entsprechen und ergänzen, ist es vorteilhaft, wenn die Kombination, bspw. zu Materialpaarung, Bauteiloberflächen und Fügeverfahren, aufeinander abgestimmt ist.

Nach einem weiteren Aspekt betrifft die Erfindung die Verwendung des Filtersystems als Kraftstofffilter. Dabei kann das Filtersystem sowohl als Wechselfiltersystem als auch als Lebensdauerfilter eingesetzt werden.

Nach einem weiteren Aspekt der Erfindung wird ein Filtersystem zum Filtern eines Fluids mit stirnseitigem Einlass und Auslass vorgeschlagen, das wenigstens ein Filterelement, ein Filtergehäuse, eine Schnellkupplungsvorrichtung zur Kopplung des Filtersystems mit einer filtersystemexternen Aufnahme, sowie einen einteiligen Dichtungshalter mit einer Dichtung zur Abdichtung des Filtersystems an der Aufnahme umfasst. Dabei umfasst der einteilige Dichtungshalter die Dichtung im Wesentlichen U-förmig, wobei der einteilige Dichtungshalter an einem stirnseitigen Rand des Filtergehäuses mit dem Filtergehäuse verbunden ist.

Das erfindungsgemäße Filtersystem kann mit der Dichtung, bspw. einer einteiligen O-RingDichtung, die U-förmig, also an drei Seiten umschlossen, in dem Dichtungshalter angeordnet ist, direkt gegen eine filterexterne Aufnahme, die bspw. an einem Druckgusskopf einer Brennkraftmaschine sitzt, abgedichtet werden. Dabei wird das Filtersystem, das hängend, stehend oder liegend angeordnet sein kann, mit der Kupplungsvorrichtung an der Aufnahme gehalten. Wenn das Filtersystem angeschraubt wird, ist es günstig, wenn die Dichtung direkt mit dem Filtersystem verbunden ist und so bei der Montage nicht herausfallen und/oder beschädigt werden kann. Günstigerweise kann der Dichtungshalter mit der Kupplungsvorrichtung verbunden sein.

Es ist vorteilhaft für die Funktion des Filtersystems, wenn der Dichtungshalter hydraulisch dicht gegen die Umgebung abdichtet, also sowohl der Dichtungshalter mit dem Filtergehäuse dicht verbunden ist, als auch die Dichtung gegen den Dichtungshalter hydraulisch dicht abdichtet. Üblicherweise werden Normleckagen von max. 0,5 Ncm³/min im Verbund mit Testgasen (bspw. Helium oder Luft unter Wasser) zugelassen. Das bedeutet, dass die Nut im Dichtungshalter, in der die Dichtung anliegt, eine hohe Oberflächengüte aufweist und typischerweise keine Riefen über 0,1 mm aufweisen darf, sowie Rauhigkeitswerte Rz für die Nut unter 40 µm liegen sollten. Der Rauhigkeitswert Rz ist dabei die sog. gemittelte Rauhtiefe, d.h. der Mittelwert aus den gemessenen Rauhtiefen.

Der einteilige Dichtungshalter, der bspw. als ein Blechteil ausgeführt ist, kann mit dem Filtergehäuse durch Schweißen, Kleben, Bördeln oder ähnlichen Fügeverfahren verbunden werden, um so eine dauerhaft dichte und mechanisch feste Verbindung darzustellen. Die Kontur für die Halterung der Dichtung kann dabei bspw. durch Schlagen, Innenhochdruckumformen ("Hydroforming"), Rollen oder ähnliche Umformverfahren hergestellt werden, um einen einteiligen Dichtungshalter, der eine U-förmige Aufnahme für die Dichtung umfasst, darzustellen.

Vorteilhaft kann die Dichtung im bestimmungsgemäßen Einsatz wenigstens in radialer und in axialer Richtung an dem einteiligen Dichtungshalter anliegen. Die Dichtung wird dabei von dem einteiligen Dichtungshalter geführt und liegt so in einer Nut des Dichtungshalters. Die Dichtung wird dabei von innen eingelegt. Auf diese Weise kann die Dichtung sowohl radial gegen eine Aufnahme, bspw. in Form eines Anschlussstutzens einer Brennkraftmaschine, als auch axial gegen eine Wand des Dichtungshalters abdichten, wodurch auch im rauen Betrieb einer Fahrzeugmontageposition eine zuverlässige Abdichtung gewährleistet ist.

Günstigerweise kann die Dichtung so eine radial zu einer Längsachse nach innen abdichtende Funktion aufweisen. Die Dichtung liegt in dieser Anordnung von außen auf einer Aufnahme auf und dichtet so das Filtersystem zur Aufnahme gegen die Umgebung ab.

In einer vorteilhaften Ausgestaltung kann der einteilige Dichtungshalter als der stirnseitige Abschluss des Filtersystems ausgebildet sein. Auf diese Weise wird das Filtersystem an der Stirnseite günstig abgedichtet und erhält zugleich einen mechanisch zuverlässigen und dauerhaften Abschluss. Die Dichtung kann so das Filtersystem günstig zur Aufnahme abdichten.

Der einteilige Dichtungshalter ist mit der Kupplungsvorrichtung formschlüssig verbunden. Eine solch feste Verbindung gewährleistet, dass die Dichtungsfunktion mit der Haltefunktion zusammen günstig kombiniert ist und dadurch beim Montieren des Filtersystems an der Aufnahme auch eine dauerhafte Dichtung gegeben ist.

Günstigerweise können am einteiligen Dichtungshalter ein oder mehrere Verbindungselemente zur Verbindung mit der Kupplungsvorrichtung vorgesehen sein. Über diese Verbindungselemente kann der Dichtungshalter in die Kupplungsvorrichtung eingerastet werden und so eine dauerhafte und stabile Verbindung eingehen.

In einer vorteilhaften Ausgestaltung kann die Kupplungsvorrichtung eine Schnellkupplung umfassen. Bspw. kann die Kupplungsvorrichtung als Bajonettverbindung ausgebildet sein, so dass das Filtersystem über eine kombinierte Dreh-/Schiebebewegung auf die Aufnahme aufgesetzt und verriegelt werden kann.

Vorteilhaft kann die Kupplungsvorrichtung ein Spannelement umfassen, das im montierten Zustand das Filtersystem axial gegen die Aufnahme verspannt. Gerade beim Einsatz einer Schnellkupplung wie einer Bajonettverbindung ist eine Verspannung günstig, welche das Filtersystem dadurch in einer Endposition der Bajonettverbindung hält.

In einer günstigen Ausgestaltung kann das Filterelement über einen Filterelementhalter, der sich an der Kupplungsvorrichtung abstützt, in dem Filtergehäuse angeordnet sein. Auf diese Weise lässt sich das Filterelement in dem Filtergehäuse verspannen und so stabil und sicher auch bei rauen Einsatzbedingungen wie im Kraftfahrzeugbetrieb üblich lagern.

Nach einem weiteren Aspekt betrifft die Erfindung eine Kombination aus einem Filtersystem und einer Aufnahme, wobei das Filtersystem einen einteiligen Dichtungshalter mit einer Dichtung zur Abdichtung des Filtersystems an der Aufnahme aufweist. Da die Schnittstellen des Filtersystems mit dem Dichtungshalter und der Kupplungsvorrichtung auf die filtersystemexterne Aufnahme sich in ihrer Funktionsweise entsprechen und ergänzen, ist es vorteilhaft, wenn die Kombination, bspw. zu Materialpaarung, Bauteiloberflächen und Fügeverfahren, aufeinander abgestimmt ist.

Nach einem weiteren Aspekt betrifft die Erfindung die Verwendung des Filtersystems als Kraftstofffilter. Dabei kann das Filtersystem sowohl als Wechselfiltersystem als auch als Lebensdauerfilter eingesetzt werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: eine Schnittdarstellung eines Filtersystems nach einem Ausführungsbeispiel der Erfindung;
- Fig. 2: eine perspektivische Ansicht eines Filtergehäuses mit Dichtungshalter, Kupplungsvorrichtung und Spannelement nach einem Ausführungsbeispiel der Erfindung;
- Fig. 3: einen Längsschnitt eines an einer Aufnahme montierten Filtersystems nach einem Ausführungsbeispiel der Erfindung;
- Fig. 4: eine perspektivische Ansicht eines Aufnahmeträgers für eine Aufnahme nach einem Ausführungsbeispiel der Erfindung;
- Fig. 5: eine perspektivische Ansicht einer Aufnahme nach einem Ausführungsbeispiel der Erfindung;
- Fig. 6: eine perspektivische Ansicht einer Kupplungsvorrichtung nach einem Ausführungsbeispiel der Erfindung; und
- Fig. 7: eine perspektivische Ansicht eines Spannelements nach einem Ausführungsbeispiel der Erfindung;
- Fig. 8: eine Explosionsdarstellung eines Filtersystems nach einem Ausführungsbeispiel der Erfindung;
- Fig. 9: eine perspektivische Ansicht eines Filtersystems nach einem Ausführungsbeispiel der Erfindung;
- Fig. 10: eine perspektivische Ansicht eines Dichtungshalters nach einem Ausführungsbeispiel der Erfindung;
- Fig. 11: eine Schnittdarstellung eines Filtersystems mit Fokus auf Dichtungshalter und Kupplungsvorrichtung nach einem weiteren Ausführungsbeispiel der Erfindung;
- Fig. 12: einen Längsschnitt eines an einer Aufnahme montierten Filtersystems nach einem Ausführungsbeispiel der Erfindung;
- Fig. 13: eine perspektivische Ansicht eines Teils einer Brennkraftmaschine mit Aufnahme für ein Filtersystem nach einem Ausführungsbeispiel der Erfindung;
- Fig. 14: eine Schnittdarstellung einer Aufnahme für ein Filtersystem nach einem Ausführungsbeispiel der Erfindung;
- Fig. 15: eine perspektivische Ansicht eines Filtergehäuses mit Dichtungshalter, Kupplungsvorrichtung und Spannelement nach einem weiteren Ausführungsbeispiel der Erfindung;
- Fig. 16: eine Schnittdarstellung von Dichtungshalter und Kupplungsvorrichtung nach einem weiteren Ausführungsbeispiel der Erfindung; und
- Fig. 17: eine weitere Schnittdarstellung von Dichtungshalter und Kupplungsvorrichtung nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

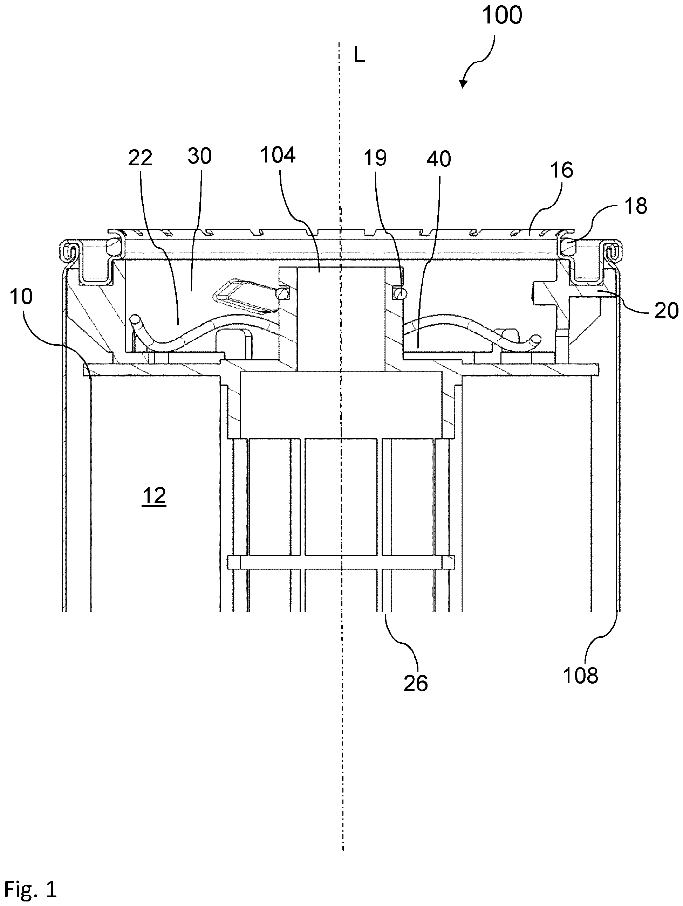

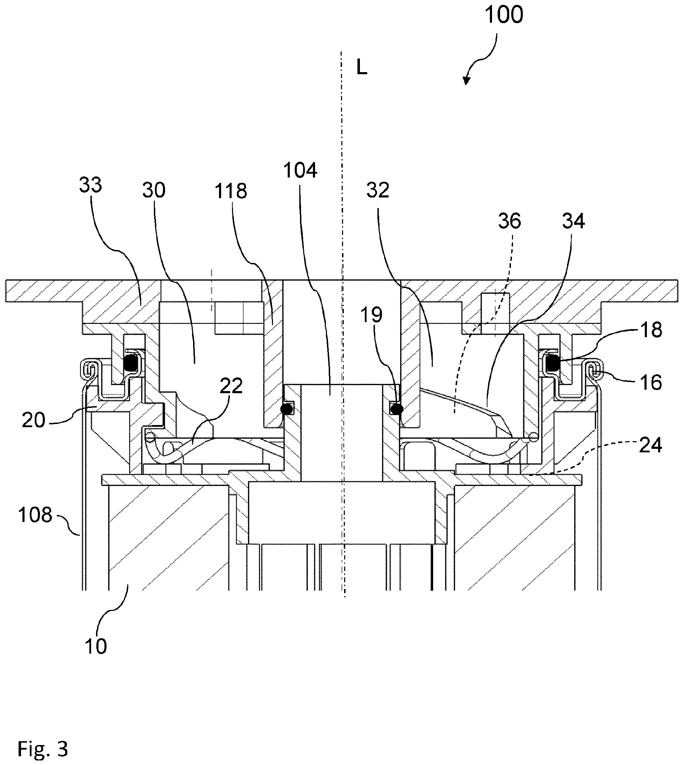

Figur 1 zeigt eine Schnittdarstellung eines Filtersystems 100 nach einem Ausführungsbeispiel der Erfindung. Das Filtersystem 100 zum Filtern eines Fluids mit stirnseitigem Einlass und Auslass 104, umfasst ein Filterelement 10, ein Filtergehäuse 108, eine Kupplungsvorrichtung 30 zur Kopplung des Filtersystems 100 an eine filtersystemexterne Aufnahme 32 (in Figur 3 dargestellt), sowie einen Dichtungshalter 16 mit einer Dichtung 18 zur Abdichtung des Filtersystems an der Aufnahme 32. Dabei sieht die Kupplungsvorrichtung 30 mehrere Kupplungselemente 36 vor, welche durch eine Schiebe-Dreh-Bewegung zumindest teilweise in einer axialen Richtung L in eine in der Aufnahme 32 angeordnete Kupplungskontur 34 einführbar sind, um so das Filtersystem 100 in der Aufnahme 32 in einer Endposition 38 zu halten und zu verriegeln. Die Kupplungsvorrichtung 30 umfasst ein Spannelement 22, das im montierten Zustand das Filtersystem 100 axial gegen die Aufnahme 32 verspannt. Dabei sieht das Spannelement 22 wenigstens zwei Erhebungen 23 in axialer Richtung vor. Die Kupplungsvorrichtung 12 ist mit dem Dichtungshalter 16 verbunden, wobei der Dichtungshalter 16 als der stirnseitige Abschluss des Filtersystems 100 ausgebildet ist. Die Dichtung 18 ist radial angeordnet, so dass diese das Filtersystem 100 im montierten Zustand radial zur Aufnahme 32 abdichtet.

Das aufgeschnittene Filterelement 10 weist einen hohlzylinderförmigen Filterkörper 12 als eigentlich filterndes Element auf, der von einem Stützrohr 26, welches in seinem Inneren angeordnet ist, ausgesteift wird. Der Einlass des zu filternden Fluids verläuft auf der Außenseite des Filterelements 10 zwischen Filterkörper 12 und Filtergehäuse 108. Das Fluid tritt dann durch den Filterkörper 12 und strömt durch den Auslass 104 zentral wieder zurück in den Auslassstutzen der Aufnahme 32. Der Auslass 104 wird gegen den Auslassstutzen 118 eines Aufnahmeträgers 33 mit einer Radialdichtung 19 abgedichtet.

Das erfindungsgemäße Filtersystem 100 kann mit der Kupplungsvorrichtung 30, die mit einer entsprechenden Dichtungsanordnung 16 verbunden ist, direkt an einer filtersystemexternen Aufnahme 32, die bspw. an einem Druckgusskopf einer Brennkraftmaschine sitzt, angebracht werden. Dabei wird das Filtersystem 100, das hängend, stehend oder liegend angeordnet sein kann, mit der Kupplungsvorrichtung 30 an der Aufnahme 32 gehalten. Wenn das Filtersystem 100 angebracht wird, ist es günstig, wenn die Dichtung 18 direkt mit dem Filtersystem 100 verbunden ist und so bei der Montage nicht herausfallen und/oder beschädigt werden kann. Günstigerweise kann der Dichtungshalter 16 mit der Kupplungsvorrichtung 30 verbunden sein.

Die Kupplungsvorrichtung 30 kann in Form einer Bajonettverbindung ausgebildet sein, so dass die Kupplungselemente 36, welche an der Kupplungsvorrichtung 30 angeordnet sind, beim Eindrehen des Filtersystems 100 in die Aufnahme 32 in eine an der Aufnahme 32 befindliche Kupplungskontur 34 gleiten können und bei weiterem Drehen des Filtersystems 100 dabei in eine Endposition 38 gleiten können. Hierdurch wird das Filtersystem 100 in der Aufnahme 32 verriegelt.

Diese Montageprozedur wird zweckmäßigerweise durch ein an der Kupplungsvorrichtung 30 angebrachtes Spannelement 22, bspw. in Form einer Druckfeder, unterstützt, welches in axialer Richtung L wirkt und bei Überwinden der Federkraft das Filtersystem 100 in die Endposition 38 gleiten lässt und sodann in dieser Endposition 38 durch die Federvorspannung verriegelt. Zum Ausdrehen des Filtersystems 100 muss dann zunächst wieder die Federvorspannung überwunden werden, um anschließend die Kupplungselemente 36 über die Kupplungskontur 34 herausgleiten zu lassen und so das Filtersystem 100 von der Aufnahme 32 abnehmen zu können.

Die Kupplungsvorrichtung 30 kann zweckmäßigerweise aus einem Kunststoff ausgebildet sein, wobei für geringere mechanische Anforderungen thermoplastische Werkstoffe eingesetzt werden können, welche eine maximale Flächenpressung bis zu 20 N/mm² zulassen, während für höhere mechanische Anforderungen Duromere eingesetzt werden können, welche eine maximale Flächenpressung bis zu 80 N/mm² erlauben. Da insbesondere die Kupplungselemente 36 höher belastet sind beim Gleiten in der Kupplungskontur 34, stellen Duromere eine bevorzugte Ausführungsform dar. Mit diesen Werkstoffen lassen sich die Kupplungselemente 36 auch in beliebiger Form gestalten, was für die konstruktive Ausführung von Vorteil der Kupplungsvorrichtung 30 und der Kupplungskontur 34 ist. Die Aufnahme 32 kann bspw. aus Aluminium gefertigt sein, das eine höhere Festigkeit als Kunststoffe aufweist, so dass auch bei mehrfachem Anbringen und Austauschen eines Filtersystems 100 keine Verschleißerscheinungen an der Aufnahme 32, die Bestandteil der Brennkraftmaschine sein kann, auftreten können.

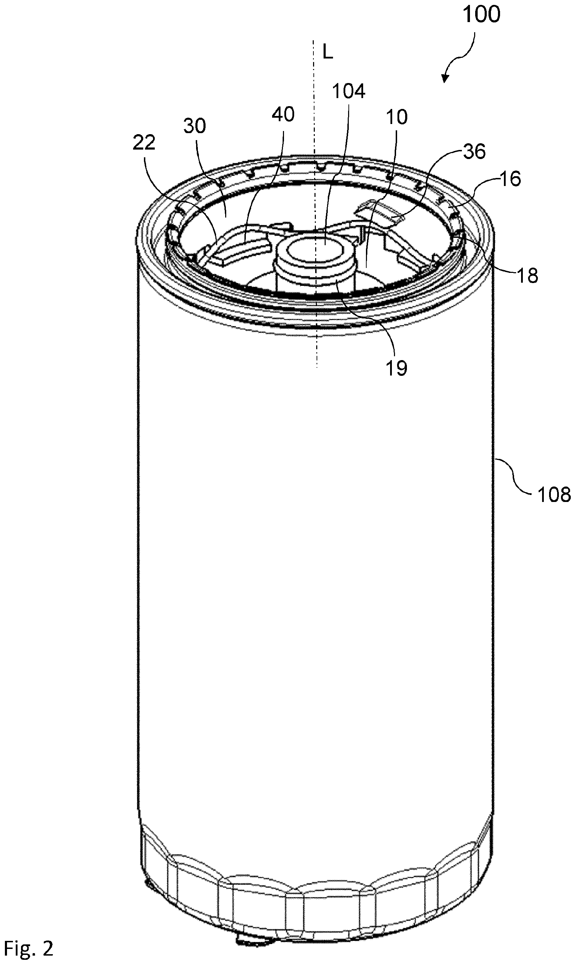

In Figur 2 ist eine perspektivische Ansicht eines Filtergehäuses 108 mit Dichtungshalter 16, Kupplungsvorrichtung 30 und Spannelement 22 nach einem Ausführungsbeispiel der Erfindung zu sehen. Die Kupplungsvorrichtung 30 sieht mehrere Halteelemente 40 zur Halterung des Spannelementes 22 vor, die in dem gezeigten Ausführungsbeispiel als eine Abstützung für das Spannelement 22 bei der Montage an die Aufnahme 32 ausgebildet sind. Auf der Innenseite der Kupplungsvorrichtung 30 sind mehrere Kupplungselemente 36 zu erkennen, welche in eine entsprechende Kupplungskontur 34 einer Aufnahme 32 eingreifen können. Der Auslass 104 ist mit einer umlaufenden Radialdichtung 19 zum Abdichten gegen einen Auslassstutzen 118 eines Aufnahmeträgers 33 versehen.

Figur 3 zeigt einen Längsschnitt eines an einer Aufnahme 32 montierten Filtersystems 100 nach einem Ausführungsbeispiel der Erfindung. Die Aufnahme 32 selbst ist an einem Aufnahmeträger 33 angebracht. Der Dichtungshalter 16 sieht ein oder mehrere Verbindungselemente 20 zur Verbindung mit der Kupplungsvorrichtung 30 vor. Als Verbindungselement 20 von Kupplungsvorrichtung 30 und Dichtungshalter 16 ist in dem gezeigten Ausführungsbeispiel eine U-förmige Nut ausgebildet, in welche der Dichtungshalter 16 eingreift. Das Filterelement 10 ist über einen Filterelementhalter 24, der sich an der Kupplungsvorrichtung 30 abstützt, in dem Filtergehäuse 108 angeordnet.

So zeigt Figur 3 eine Kombination aus einem Filtersystem 100 und einer Aufnahme 32, wobei die Aufnahme 32 eine Kupplungskontur 34 aufweist, mit welcher ein oder mehrere Kupplungselemente 36 einer Kupplungsvorrichtung 30 des Filtersystems 100 durch eine Schiebe-Dreh-Bewegung zumindest teilweise in einer axialen Richtung L kuppelbar sind.

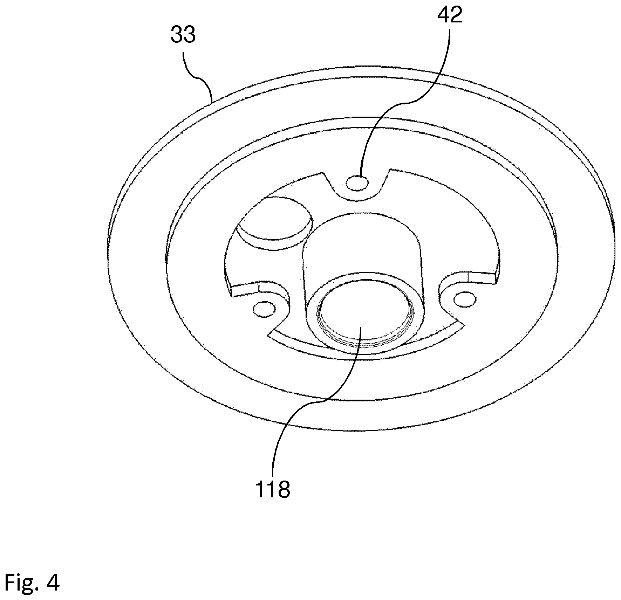

In Figur 4 ist eine perspektivische Ansicht eines Aufnahmeträgers 33 für eine Aufnahme 32 nach einem Ausführungsbeispiel der Erfindung dargestellt, der einen Auslassstutzen 118 für den Auslass 104 des Filtersystems 100 aufweist. Weiter sind in dem Aufnahmeträger 33 drei Bohrungen 42 zur Verschraubung mit der Aufnahme 32 angeordnet.

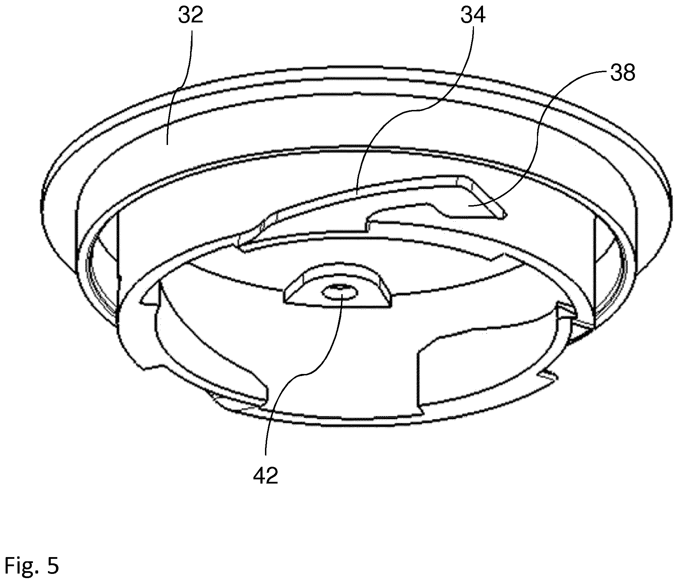

Figur 5 zeigt eine perspektivische Ansicht einer Aufnahme 32 nach einem Ausführungsbeispiel der Erfindung. Die Aufnahme 32 weist schräg verlaufende Kupplungskonturen 34 auf, in welche die Kupplungselemente 36 der Kupplungsvorrichtung 30 eingreifen können, um bei einer Drehung in die Endposition 38 zu gelangen und dort das Filtersystem 100 zu verrasten und verriegeln. Auch an der Aufnahme 32 sind drei Bohrungen 42 zur Verbindung mit dem Aufnahmeträger 33 angebracht.

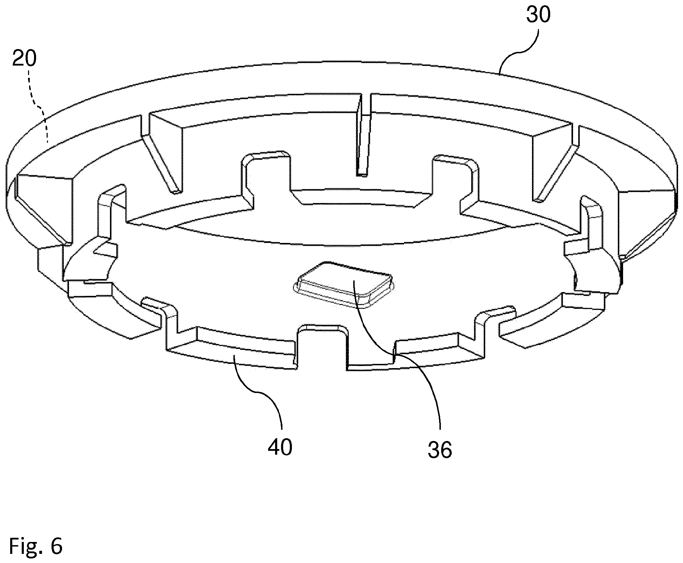

In Figur 6 ist eine perspektivische Ansicht einer Kupplungsvorrichtung 30 nach einem Ausführungsbeispiel der Erfindung dargestellt. Die Kupplungsvorrichtung 30 umfasst einen kreisförmigen Ring, auf dessen Innenseite Kupplungselemente 36 zum Eingriff in die Kupplungskontur 34, sowie Halteelemente 40 zur Aufnahme des Spannelements 22 angeordnet sind. Weiter ist eine U-förmige Nut als Verbindungselement 20 zum Dichtungshalter 16 angeordnet.

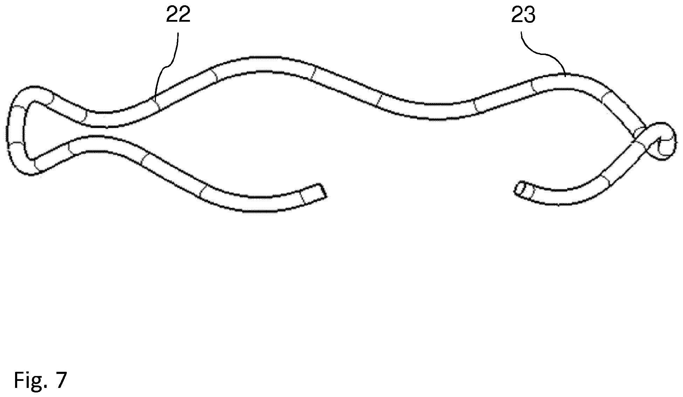

Figur 7 zeigt eine perspektivische Ansicht eines Spannelements 22 nach einem Ausführungsbeispiel der Erfindung. Das Spannelement 22 ist in dem gezeigten Ausführungsbeispiel als kreisförmig gebogener Draht dargestellt mit wellenförmigen Erhebungen 23.

Günstigerweise kann das Spannelement 22 wenigstens zwei Erhebungen 23 in axialer Richtung L vorsehen. Durch die Erhebungen 23 wird zum einen die Vorspannkraft des Spannelements 22 aufgebracht, zum anderen haben die Erhebungen 23 den Vorteil, dass bei Versagen einer Erhebung 23 bspw. durch Materialbruch, weitere Erhebungen 23 vorhanden sind, um die Funktion in Form der Vorspannkraft des Spannelements 22 dennoch aufrechtzuerhalten.

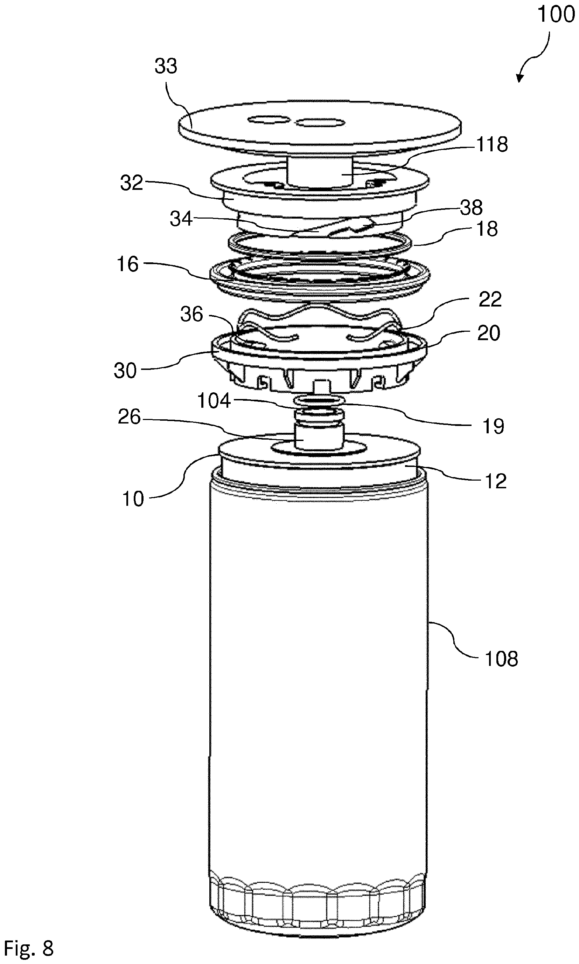

In Figur 8 ist eine Explosionsdarstellung eines Filtersystems 100 nach einem Ausführungsbeispiel der Erfindung dargestellt. In dieser Darstellung sind das Ineinandergreifen der verschiedenen Montageelemente sowie die Montagereihenfolge des Filtersystems zu erkennen.

Ein Aufnahmeträger 33, der an einer Brennkraftmaschine angebracht ist und einen Auslassstutzen 118 zum Auslass des gefilterten Fluids wie beispielsweise Öl aus dem Filtersystem 100 in die Brennkraftmaschine aufweist, trägt eine Aufnahme 32 für ein Filtersystem 100. Das Filtersystem 100 umfasst ein Filterelement 10 mit einem Filterkörper 12, der in einem Filtergehäuse 108 angeordnet ist. Das zu filternde Fluid tritt von außen zwischen Filtergehäuse 108 und Filterkörper 12 durch den Filterkörper 12 in den Innenbereich des Filterelements und strömt durch das Stützrohr 26 am oberen Ende wieder aus dem Filterelement 10. Das Filterelement 10 wird am oberen Ende abgeschlossen von einer Kupplungsvorrichtung 30, welche Kupplungselemente 36 zum Eingreifen und Verrasten mit in der Aufnahme 32 angeordneten Kupplungskonturen sowie Halteelemente 40 zum Abstützen eines Spannelements 22 aufweist, welches Filtersystem 100 und Aufnahme 32 gegeneinander verspannt. Das Filtersystem 100 wiederum wird abgeschlossen durch den Dichtungshalter 16, der in einem nutartigen Verbindungselement 20 der Kupplungsvorrichtung 30 angeordnet ist und der zum einen die Dichtung 18 in einer Nut trägt sowie das Filtersystem 100 durch einen beispielsweise umgebördelten Rand mit dem Filtergehäuse 108 dicht verschließt.

Das Spannelement 22 wird auf der Innenseite der Kupplungsvorrichtung 30 auf die Halteelemente 40 gelegt. Die Radialdichtung 19 dichtet das Stützrohr 26 auf der Außenseite gegen den Auslassstutzen 118 des Aufnahmeträgers 33 und damit den Auslass 104 des Filtersystems 100 ab. Das Filtersystem 100 wird zur Montage an einer Brennkraftmaschine an die Aufnahme 32 angeschlossen. Durch Gegeneinanderverdrehen des Filtersystems 100 gegen die Aufnahme 32 können die Kupplungselemente 36 der Kupplungsvorrichtung 30 in die Kupplungskonturen 34 der Aufnahme 32 greifen und so in den Endpositionen 38 der Kupplungskonturen 34 verrasten. Dabei wird das in der Kupplungsvorrichtung 30 auf den Halteelementen 40 angeordnete Spannelement 22 gegen die Aufnahme 32 verspannt.

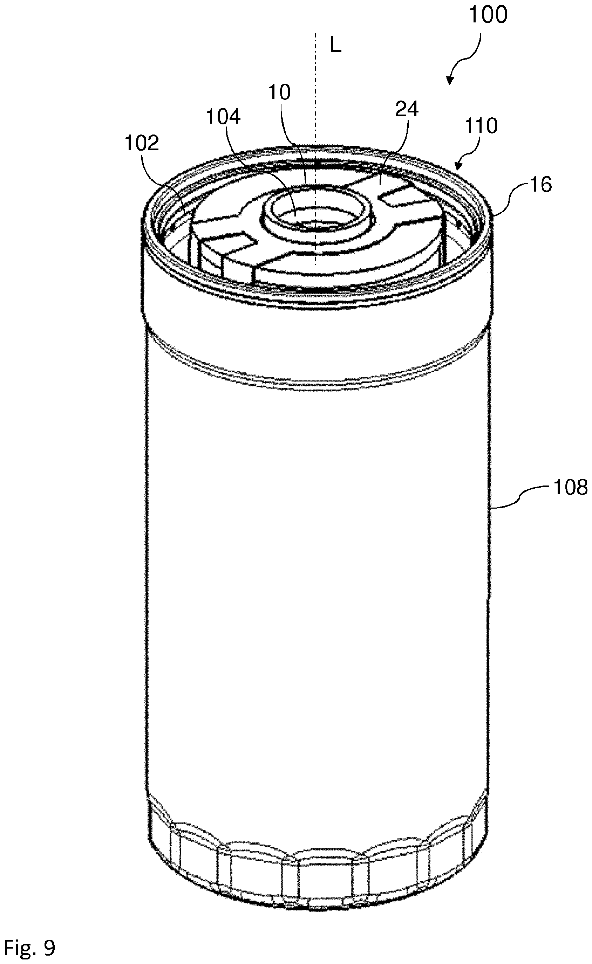

Figur 9 zeigt eine perspektivische Ansicht eines Filtersystems 100 nach einem weiteren Ausführungsbeispiel der Erfindung. Das Filtersystem 100 zum Filtern eines Fluids mit stirnseitigem Einlass 102 und Auslass 104, umfasst ein Filterelement 10, ein Filtergehäuse 108, eine Kupplungsvorrichtung 30 zur Kopplung des Filtersystems 100 mit einer filtersystemexternen Aufnahme 32, sowie einen einteiligen Dichtungshalter 16 mit einer Dichtung 18 zur Abdichtung des Filtersystems an der Aufnahme 32. Dabei umfasst der einteilige Dichtungshalter 16 die Dichtung 18 im Wesentlichen U-förmig, wobei der einteilige Dichtungshalter 16 an einem stirnseitigen Rand 110 des Filtersystems 100 mit dem Filtergehäuse 108 verbunden ist. Der einteilige Dichtungshalter 16 ist dabei als der stirnseitige Abschluss des Filtersystems 100 ausgebildet. Das Filtersystem 100 ist zur Verwendung als Kraftstofffilter vorgesehen.

Das erfindungsgemäße Filtersystem 100 kann mit der Dichtung 18, bspw. einer einteiligen O-Ring-Dichtung, die U-förmig, also an drei Seiten umschlossen, in dem Dichtungshalter 16 angeordnet ist, direkt gegen eine filterexterne Aufnahme 32, die bspw. an einem Druckgusskopf einer Brennkraftmaschine sitzt, abgedichtet werden. Dabei wird das Filtersystem 100, das hängend, stehend oder liegend angeordnet sein kann, mit der Kupplungsvorrichtung 30 an der Aufnahme 32 gehalten. Wenn das Filtersystem 100 angeschraubt wird, ist es günstig, wenn die Dichtung 18 direkt mit dem Filtersystem 100 verbunden ist und so bei Montage nicht herausfallen und/oder beschädigt werden kann. Günstigerweise kann der Dichtungshalter 16 mit der Kupplungsvorrichtung 30 verbunden sein.

Es ist vorteilhaft für die Funktion des Filtersystems 100, wenn der Dichtungshalter 16 hydraulisch dicht gegen die Umgebung abdichtet, also sowohl der Dichtungshalter 16 mit dem Filtergehäuse 108 dicht verbunden ist, als auch die Dichtung 18 gegen den Dichtungshalter 16 hydraulisch dicht abdichtet. Üblicherweise werden Normleckagen von max. 0,5 Ncm³/min im Verbund mit Testgasen (bspw. Helium oder Luft unter Wasser) zugelassen. Das bedeutet, dass die Nut im Dichtungshalter, in der die Dichtung anliegt, typischerweise keine Riefen über 0,1 mm aufweisen darf, sowie Rauhigkeitswerte Rz für die Nut unter 40 µm liegen sollten.

Der einteilige Dichtungshalter 16, der bspw. als ein Blechteil ausgeführt ist, kann mit dem Filtergehäuse 108 durch Schweißen, Kleben, Bördeln oder ähnlichen Fügeverfahren verbunden werden, um so eine dauerhaft dichte und mechanisch feste Verbindung darzustellen. Die Kontur für die Halterung der Dichtung 18 kann dabei bspw. durch Schlagen, Hydroforming, Rollen oder ähnliche Umformverfahren hergestellt werden, um einen einteiligen Dichtungshalter 16, der eine U-förmige Aufnahme für die Dichtung 18 umfasst, darzustellen.

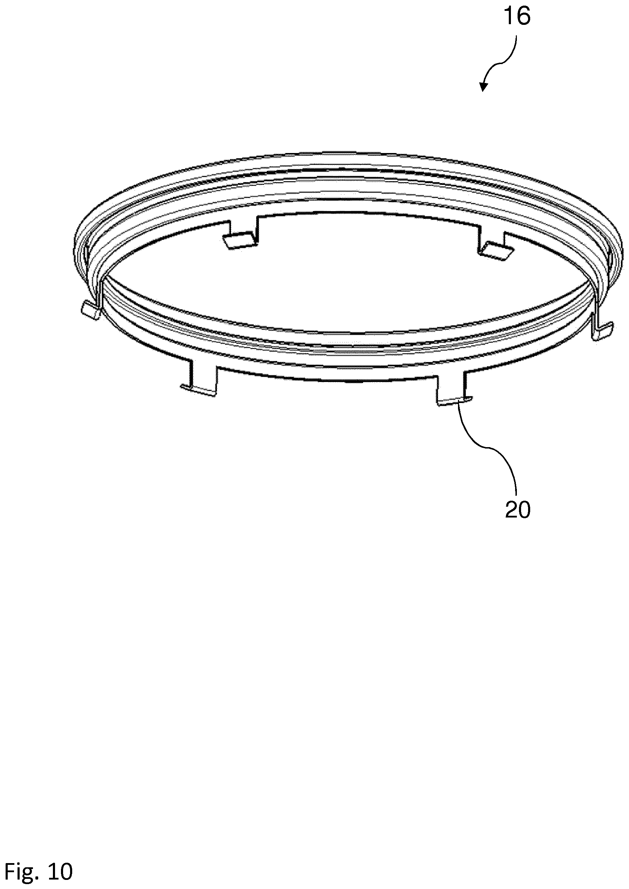

In Figur 10 ist eine perspektivische Ansicht eines Dichtungshalters 16 nach einem Ausführungsbeispiel der Erfindung dargestellt. An dem einteiligen Dichtungshalter 16 sind mehrere Verbindungselemente 20 zur Verbindung mit der Kupplungsvorrichtung 30 vorgesehen. Bei dem gezeigten Ausführungsbeispiel sind das hakenförmige Verbindungsteile 20, die in eine Kupplungsvorrichtung einrasten können.

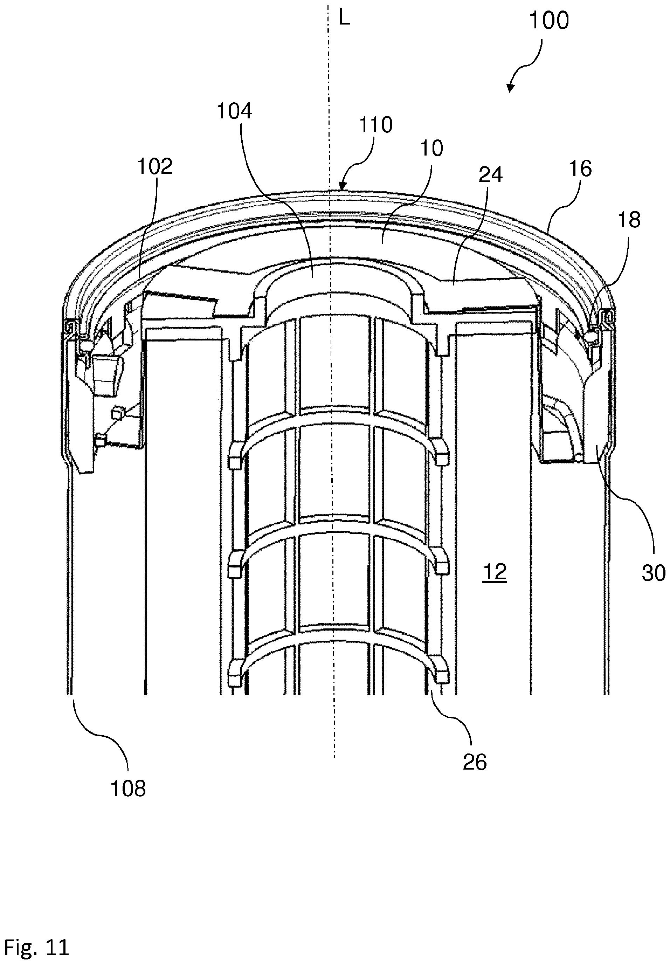

Figur 11 zeigt eine Schnittdarstellung eines Filtersystems 100 mit Fokus auf Dichtungshalter 16 und Kupplungsvorrichtung 30 nach einem weiteren Ausführungsbeispiel der Erfindung. Die Dichtung 18 liegt dabei im bestimmungsgemäßen Einsatz wenigstens in radialer und in axialer Richtung an dem einteiligen Dichtungshalter 16 an. Der einteilige Dichtungshalter 16 ist mit der Kupplungsvorrichtung 12 formschlüssig verbunden. Das Filterelement 10 ist über einen Filterelementhalter 24, der sich an der Kupplungsvorrichtung 30 abstützt, in dem Filtergehäuse 108 angeordnet. Der Filterelementhalter 26 greift auf der unteren Seite in die Kupplungsvorrichtung 30 ein, so dass das Filterelement 10 im Filtergehäuse 108 fest verspannt ist. Das Filterelement 10, das im Wesentlichen aus einem Filterkörper 12 gebildet ist, weist im Inneren zur Versteifung ein Stützrohr 26 auf. Der Auslass 104 des Filtersystems 100 verläuft im Inneren des Stützrohrs 26, während der Einlass 102 tangential zwischen Dichtungshalter 16 und Filtergehäuse 108 auf der einen Seite und auf der Außenwand des Filterelements 10 verläuft.

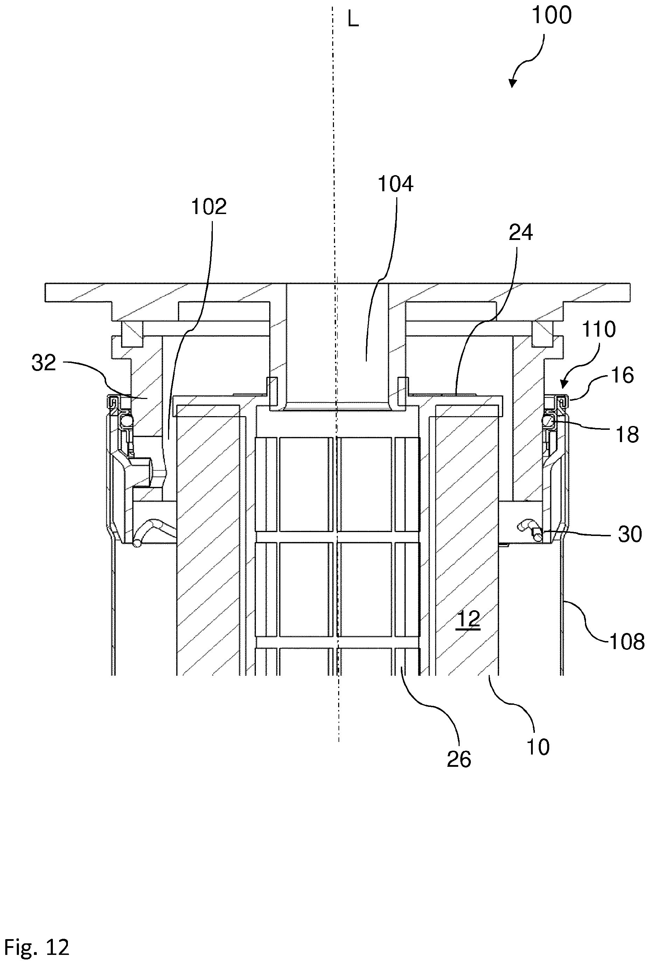

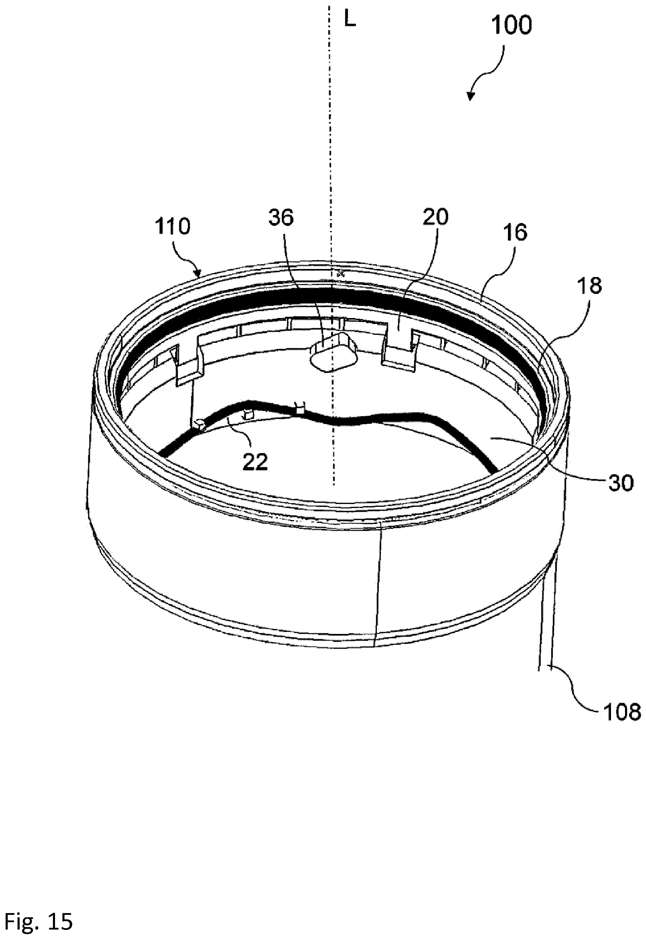

Figur 12 zeigt einen Längsschnitt eines an einer Aufnahme 32 montierten Filtersystems 100 nach einem Ausführungsbeispiel der Erfindung. Das Filtersystem 100 ist dabei auf die Aufnahme 32, die bspw. an einer Brennkraftmaschine angeordnet ist, aufgeschoben und über die Kupplungsvorrichtung 30 mit dieser Aufnahme 32 verbunden. Die Kupplungsvorrichtung 30 umfasst dabei eine Schnellkupplung, bspw. eine Bajonettkupplung. Die Kupplungsvorrichtung 30 umfasst ein Spannelement 22, das im montierten Zustand das Filtersystem 100 axial gegen die Aufnahme 32 verspannt. Das Spannelement 22 ist in dem in Figur 12 dargestellten Längsschnitt nicht zu sehen, ist jedoch in Figur 15 erkennbar. Die Dichtung 18 weist eine radial zu einer Längsachse L nach innen abdichtende Funktion auf, wo die Dichtung 18 an einer Seitenfläche der Aufnahme 32 anliegt.

Die Anordnung in Figur 12 stellt so eine Kombination aus einem Filtersystem 100 und einer Aufnahme 32 dar, wobei das Filtersystem 100 einen einteiligen Dichtungshalter 16 mit einer Dichtung 18 zur Abdichtung des Filtersystems an der Aufnahme 32 aufweist.

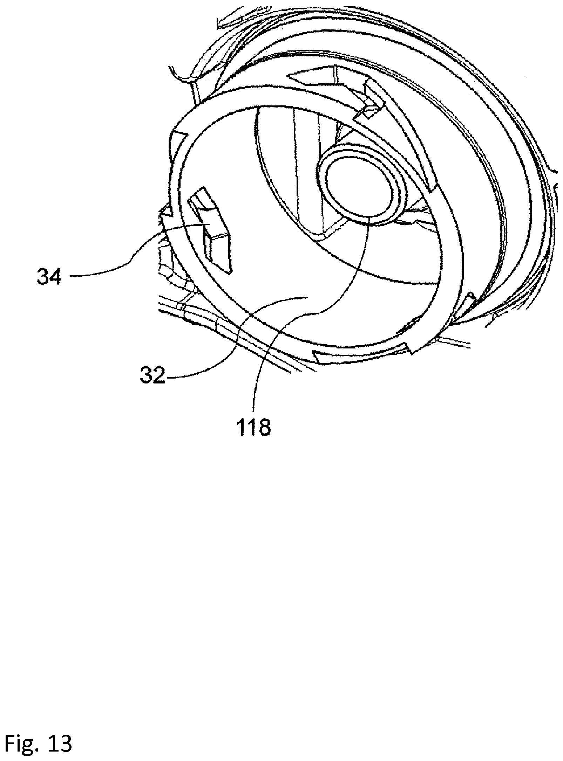

Figur 13 zeigt eine perspektivische Ansicht eines Teils einer Brennkraftmaschine mit Aufnahme 32 für ein Filtersystem 100 nach einem Ausführungsbeispiel der Erfindung. Die hohlzylinderförmige Aufnahme 32 weist Kupplungskonturen 34 auf, in welche Kupplungselemente 36 einer Kupplungsvorrichtung 30, bspw. Nocken einer Bajonettverbindung, eingreifen und verrasten können. Im Zentrum der Aufnahme 32 ist ein Auslassstutzen zu erkennen, der bei der Montage des Filterelements 100 in das Stützrohr 26 des Filterelements 100 eingreift und so den Auslass 104 des Filtersystems 100 mit der Brennkraftmaschine verbindet.

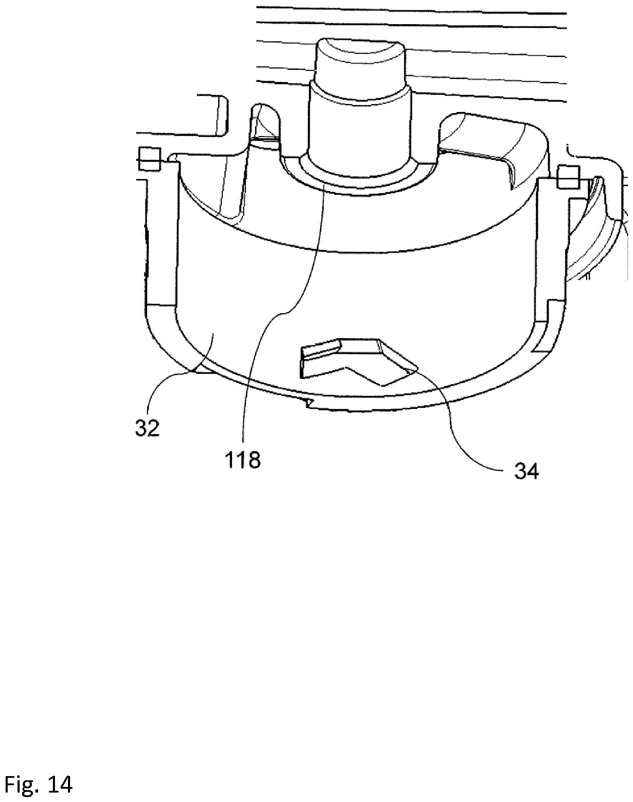

In Figur 14 ist eine entsprechende Schnittdarstellung einer Aufnahme 32 für ein Filtersystem 100, wie in Figur 13 dargestellt, zu sehen.

Figur 15 zeigt eine perspektivische Ansicht eines Filtergehäuses 108 mit Dichtungshalter 16, Kupplungsvorrichtung 30 und Spannelement 22 nach einem weiteren Ausführungsbeispiel der Erfindung. In den Dichtungshalter 16 ist eine Dichtung 18 eingelegt, die U-förmig von den Konturen des Dichtungshalters 16 umschlossen wird. Der Dichtungshalter 16 ist mit den Verbindungselementen 20 mit der Kupplungsvorrichtung 30 fest verbunden und verrastet. Die Kupplungsvorrichtung 30 weist an ihrer Innenseite Kupplungselemente 36 einer Schnellkupplung auf, von denen eines zu sehen ist, die in entsprechende Kupplungskonturen 34, die auf einer Aufnahme 32 angeordnet sind, eingreifen und mit diesen verrasten können. Zur festen Verspannung des Filterelements 100 mit der Aufnahme 32 ist auf der Innenseite der Kupplungsvorrichtung auch ein Spannelement 22 angeordnet, das bspw. aus Federstahldraht gebildet sein kann.

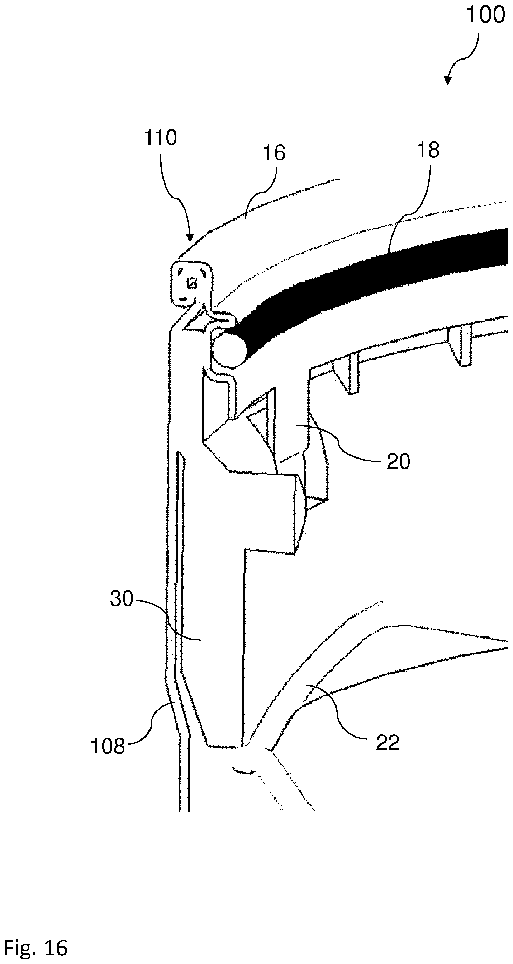

In Figur 16 ist dazu eine Schnittdarstellung von Dichtungshalter 16 und Kupplungsvorrichtung 30 nach einem weiteren Ausführungsbeispiel der Erfindung zu sehen. Man erkennt deutlich, wie die Verbindungselemente 20 in die Kupplungsvorrichtung 30 eingreifen. Weiter ist zu sehen, wie die radial und axial wirkende Dichtung 18 in der Kontur des einteiligen Dichtungshalters 16 liegt und von diesem U-förmig umschlossen wird.

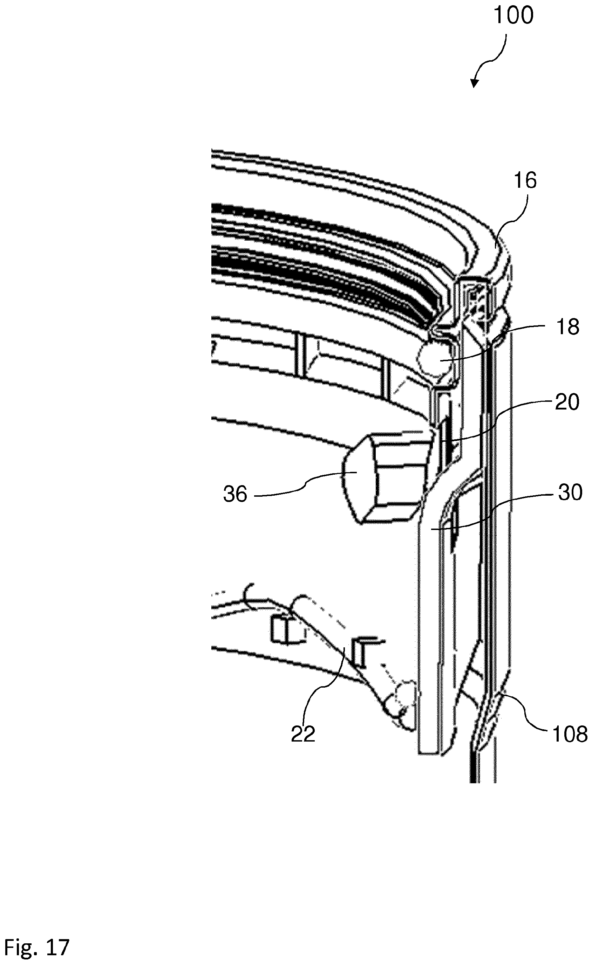

Figur 17 zeigt dazu eine weitere Schnittdarstellung von Dichtungshalter 16 und Kupplungsvorrichtung 30 nach einem Ausführungsbeispiel der Erfindung. Auf der Innenseite der Kupplungsvorrichtung 30 ist ein Kupplungselement 20 angeordnet, bspw. angespritzt, sowie das Spannelement 22 zur Verspannung des Filtersystems 100 gegen die Aufnahme 32.

## Patentansprüche

1. Filtersystem (100) zum Filtern eines Fluids mit stirnseitigem Einlass (102) und Auslass (104), umfassend
- wenigstens ein Filterelement (10),
- ein Filtergehäuse (108),
- eine Kupplungsvorrichtung (30) zur Kopplung des Filtersystems (100) an eine filtersystemexterne Aufnahme (32),
- einen Dichtungshalter (16) mit einer Dichtung (18) zur Abdichtung des Filtersystems an der Aufnahme (32),
wobei die Kupplungsvorrichtung (30) ein oder mehrere Kupplungselemente (36) vorsieht, welche durch eine Schiebe-Dreh-Bewegung zumindest teilweise in einer axialen Richtung (L) in eine in der Aufnahme (32) angeordnete Kupplungskontur (34) einführbar sind, um so das Filtersystem (100) in der Aufnahme (32) in einer Endposition (38) zu halten und zu verriegeln, **dadurch gekennzeichnet, dass** der Dichtungshalter (16) einteilig ist und die Dichtung (18) im Wesentlichen U-förmig umfasst, wobei der einteilige Dichtungshalter (16) an einem stirnseitigen Rand (110) des Filtergehäuses (108) mit dem Filtergehäuse (108) verbunden ist, wobei die Kupplungsvorrichtung (30) mit dem Dichtungshalter (16) formschlüssig verbunden ist und die Kupplungsvorrichtung (30) ein Spannelement (22) umfasst, das im montierten Zustand das Filtersystem (100) axial gegen die Aufnahme (32) verspannt, und wobei die Kupplungsvorrichtung (30) ein oder mehrere Halteelemente (40) zur Halterung des Spannelementes (22) aufweist.

2. Filtersystem nach Anspruch 1, wobei die Dichtung (18) radial angeordnet ist, so dass diese das Filtersystem (100) im montierten Zustand radial zur Aufnahme (32) abdichtet.

3. Filtersystem nach Anspruch 1 oder 2, wobei die Dichtung (18) im bestimmungsgemäßen Einsatz wenigstens in radialer und in axialer Richtung an dem einteiligen Dichtungshalter (16) anliegt.

4. Filtersystem nach Anspruch 2 oder 3, wobei die Dichtung (18) eine radial zu einer Längsachse (L) nach innen abdichtende Funktion aufweist.

5. Filtersystem nach einem der vorhergehenden Ansprüche, wobei der Dichtungshalter (16) als der stirnseitige Abschluss des Filtersystems (100) ausgebildet ist.

6. Filtersystem nach einem der vorhergehenden Ansprüche, wobei am Dichtungshalter (16) ein oder mehrere Verbindungselemente (20) zur Verbindung mit der Kupplungsvorrichtung (30) vorgesehen sind.

7. Filtersystem nach einem der vorhergehenden Ansprüche, wobei das Spannelement (22) wenigstens zwei Erhebungen (23) in axialer Richtung vorsieht.

8. Filtersystem nach einem der vorhergehenden Ansprüche, wobei das Filterelement (10) über einen Filterelementhalter (24), der sich an der Kupplungsvorrichtung (30) abstützt, in dem Filtergehäuse (108) angeordnet ist

9. Kombination aus einem Filtersystem (100) nach einem der vorhergehenden Ansprüche und einer Aufnahme (32), wobei die Aufnahme (32) eine Kupplungskontur (34) aufweist, mit welcher ein oder mehrere Kupplungselemente (36) einer Kupplungsvorrichtung (30) des Filtersystems (100) durch eine Schiebe-Dreh-Bewegung zumindest teilweise in einer axialen Richtung (L) kuppelbar sind.

10. Verwendung des Filtersystems (100) nach einem der Ansprüche 1 bis 8 als Kraftstofffilter.

## Claims

1. Filter system (100) for filtering a fluid having a frontal inlet (102) and outlet (104), comprising
- at least one filter element (10),
- a filter housing (108),
- a coupling device (30) for coupling the filter system (100) to a receptacle (32) external to the filter system,
- a seal retainer (16) having a seal (18) for sealing the filter system at the receptacle (32),
wherein the coupling device (30) provides one or more coupling elements (36) which can be introduced by a slide-and-turn movement at least partially in an axial direction (L) into a coupling contour (34) disposed in the receptacle (32) so as to hold and lock the filter system (100) in the receptacle (32) in a final position (38), **characterized in that** the seal retainer (16) is made in one piece and surrounds the seal (18) substantially in a U-shaped manner, wherein the one-piece seal retainer (16) is connected on a frontal edge (110) of the filter housing (108) to the filter housing (108), wherein the coupling device (30) is positively connected to the seal retainer (16) and the coupling device (30) comprises a clamping element (22) which, in the installed state, clamps the filter system (100) axially against the receptacle (32), and wherein the coupling device (30) features one or more holding elements (40) for holding the clamping element (22).

2. Filter system according to claim 1, wherein the seal (18) is disposed radially in such a way that it seals the filter system (100) in the installed state radially against the receptacle (32).

3. Filter system according to claim 1 or 2, wherein the seal (18), in the intended use, rests on the one-piece seal retainer (16) at least in radial and axial direction.

4. Filter system according to claim 2 or 3, wherein the seal (18) features a radially inwardly sealing function with respect to a longitudinal axis (L).

5. Filter system according to one of the preceding claims, wherein the seal retainer (16) is realized as the frontal end of the filter system (100).

6. Filter system according to one of the preceding claims, wherein one or more connecting elements (20) are provided on the seal retainer (16) for connecting to the coupling device (30).

7. Filter system according to one of the preceding claims, wherein the clamping element (22) provides at least two projections (23) in the axial direction.

8. Filter system according to one of the preceding claims, wherein the filter element (10) is disposed in the filter housing (108) via a filter element holder (24) which is supported by the coupling device (30).

9. Combination of a filter system (100) according to one of the preceding claims and of a receptacle (32), wherein the receptacle (32) features a coupling contour (34) with which one or more coupling elements (36) of a coupling device (30) of the filter system (100) can be coupled at least partially in an axial direction (L) by means of a slide-and-turn movement.

10. Use of the filter system (100) according to one of the claims 1 to 8 as fuel filter.

## Revendications

1. Système de filtre (100) destiné à filtrer un fluide avec une entrée (102) et une sortie (104) frontales, comprenant
- au moins un élément filtrant (10),
- un boîtier de filtre (108),
- un dispositif d'accouplement (30) destiné à accoupler le système de filtre (100) à un logement (32) situé à l'extérieur du système de filtrage,
- un porte-joint (16) avec un joint d'étanchéité (18) destiné à étancher le système de filtre au niveau du logement (32),
dans lequel le dispositif d'accouplement (30) prévoit un ou plusieurs éléments d'accouplement (36) qui peuvent être introduits par un mouvement de glissement et de rotation au moins partiellement dans une direction axiale (L) dans un contour d'accouplement (34) disposé dans le logement (32) afin de maintenir et de verrouiller le système de filtre (100) dans le logement (32) dans une position finale (38), **caractérisé en ce que** le porte-joint (16) est monobloc et entoure le joint (18) essentiellement en forme de U, dans lequel le porte-joint monobloc (16) est connecté au niveau d'un bord frontal (110) du boîtier de filtre (108) au boîtier de filtre (108), dans lequel le dispositif d'accouplement (30) est connecté au porte-joint (16) par engagement positif et le dispositif d'accouplement (30) comprend un élément de serrage (22) qui, en état monté, serre le système de filtre (100) de manière axiale contre le logement (32), et dans lequel le dispositif d'accouplement (30) présente un ou plusieurs éléments de maintien (40) destinés à supporter l'élément de serrage (22).

2. Système de filtre selon la revendication 1, dans lequel le joint d'étanchéité (18) est disposé de manière radiale de telle manière qu'il étanche, en état monté, le système de filtre (100) de manière radiale contre le logement (32).

3. Système de filtre selon la revendication 1 ou 2, dans lequel le joint d'étanchéité (18), lorsqu'il est utilisé conforme à son usage, touche le porte-joint (16) au moins en direction radiale et axiale.

4. Système de filtre selon la revendication 2 ou 3, dans lequel le joint d'étanchéité (18) présente une fonction d'étanchéité radialement vers l'intérieur par rapport à un axe longitudinal (L).

5. Système de filtre selon l'une des revendications précédentes, dans lequel le porte-joint (16) est réalisé en tant que fermeture frontale du système de filtre (100).

6. Système de filtre selon l'une des revendications précédentes, dans lequel un ou plusieurs éléments de raccordement (20) sont prévus sur le porte-joint (16) destinés au raccordement au dispositif d'accouplement (30).

7. Système de filtre selon l'une des revendications précédentes, dans lequel l'élément de serrage (22) prévoit au moins deux saillies (23) en direction axiale.

8. Système de filtre selon l'une des revendications précédentes, dans lequel l'élément filtrant (10) est disposé dans le boîtier de filtre (108) par l'intermédiaire d'un support d'élément filtrant (24) qui s'appuie sur le dispositif d'accouplement (30).

9. Combinaison d'un système de filtre (100) selon l'une des revendications précédentes et d'un logement (32), dans laquelle le logement (32) présente un contour d'accouplement (34) au moyen duquel un ou plusieurs éléments d'accouplement (36) d'un dispositif d'accouplement (30) du système de filtre (100) peuvent être accouplés au moins partiellement dans une direction axiale (L) par un mouvement de glissement et de rotation.

10. Utilisation du système de filtre (100) selon l'une des revendications 1 à 8 en tant que filtre à carburant.
